# EUROPÄISCHE PATENTSCHRIFT

(11) **EP 3 918 152 B1**
(45) Veröffentlichungstag und Bekanntmachung des Hinweises auf die Patenterteilung: **18.06.2025**
(21) Anmeldenummer: 20703180.8
(22) Anmeldetag: 29.01.2020
(51) Int. Cl.: E04G 21/04, B66C 23/78, F15B 11/00, B66C 13/18

(54) **FAHRZEUG**
VEHICLE
VÉHICULE

(30) Priorität: 30.01.2019 DE 102019201182
(43) Veröffentlichungstag der Anmeldung: 08.12.2021
(73) Patentinhaber: Putzmeister Engineering GmbH, 72631 Aichtal (DE); HAWE Hydraulik SE, 85609 Aschheim (DE)
(72) Erfinder: VEIT, Jan-Martin, 72124 Pliezhausen (DE); DIEBOLD, Martin, 72768 Reutlingen (DE)
(74) Vertreter: Patentanwälte Ruff, Wilhelm, Beier, Dauster & Partner mbB
(86) Internationale Anmeldenummer: PCT/EP2020/052154
(87) Internationale Veröffentlichungsnummer: WO 2020/157124

(56) Entgegenhaltungen:
- EP-A1- 2 594 807
- EP-B1- 0 670 946
- WO-A2-2013/021404
- CN-B- 103 062 610

## Beschreibung

Die Erfindung betrifft ein Fahrzeug mit einer Mastanordnung darauf, wobei an dem Fahrzeug noch mindestens eine Abstützvorrichtung vorgesehen ist.

Derartige Fahrzeuge weisen beispielsweise noch eine Dickstoffpumpe auf und sind dann auch als sogenannte Betonpumpen bekannt. Sie weisen eine hydraulische Antriebsanordnung auf, mit der sowohl die Mastanordnung als auch die mindestens eine Abstützvorrichtung bewegt werden kann. Die Abstützvorrichtung dient dazu, das Fahrzeug abzustützen oder auszurichten. Die Mastanordnung darauf wird hydraulisch bewegt und ausgerichtet und dient beispielsweise dazu, Beton mittels der Betonpumpe bzw. Dickstoffpumpe auf einer Baustelle an einen bestimmten Punkt zur Weiterverarbeitung zu bringen.

Die hydraulischen Antriebsanordnungen und vor allem die Ventilanordnungen sind relativ aufwändig und somit teuer in der Bereitstellung.

Aus der DE 10 2018 202 148 B3 ist ein Mobilhydrauliksystem für beispielsweise einen Mobilkran bekannt, welches ein- und ausfahrbare Stützen sowie einen vielseitig bewegbaren Mast ansteuern kann. Das Mobilhydrauliksystem weist dabei zwei Proportionalventilen entsprechende Wegeschieber auf, denen jeweils ein Umschaltventil nachgeschaltet ist. Mit jedem Umschaltventil können zwei Abgänge als Hydroverbraucheranschlüsse versorgt werden.

Aus der EP 2 594 807 A1 ist ein Hydrauliksystem für beispielsweise eine Hubarbeitsbühne bekannt. Auch hier sind mehrere Proportionalventile in einer Ventilanordnung bekannt, denen Schaltelemente als Umschaltventileinrichtungen nachgeschaltet sind. Mittels dieser Schaltelemente können als Hydraulikzylinder ausgebildete Arbeitsmaschinen angetrieben werden.

Aus der EP 0 670 946 B1 ist ein Fahrzeug mit Abstützungen, einer Mastanordnung und einer Dickstoffpumpe bekannt, wobei die Abstützungen und die Mastglieder mit einzelnen Hydraulikzylindern angetrieben werden. Für jeden der Hydraulikzylinder ist ein Proportionalventil als Steuerventil vorgesehen.

Aus der WO 2013/021404 A2 ist ein weiteres Fahrzeug mit Abstützungen und einer Mastanordnung bekannt, siehe Fig. 3A und 3B. Auch hier werden die Abstützungen und die Mastanordnung mit einer hydraulischen Antriebsanordnung bewegt. Hierfür ist eine größere Anzahl von Abgängen von einer Umschalteinrichtung an der hydraulischen Antriebsanordnung vorgesehen, wobei die Abgänge jeweils an die Abstützungen oder an die Mastanordnung gehen. Die Abgänge sind dabei in funktionale Gruppen aufgeteilt, wobei die Abgänge unabhängig von den Gruppen jeweils durchwechselnd an der Umschalteinrichtung angeordnet sind.

### AUFGABE UND LÖSUNG

Der Erfindung liegt die Aufgabe zugrunde, ein eingangs genanntes Fahrzeug zu schaffen, mit dem Probleme des Standes der Technik gelöst werden können und es insbesondere möglich ist, eine einfacher ausgebildete hydraulische Antriebsanordnung und Ventilanordnung vorzusehen.

Gelöst wird diese Aufgabe durch ein Fahrzeug mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass das Fahrzeug die mindestens eine Abstützvorrichtung aufweist, um es abstützen und/oder ausrichten zu können. Vorteilhaft sind es mindestens zwei Abstützvorrichtungen, besonders vorteilhaft mindestens vier Abstützvorrichtungen, die verteilt angeordnet sind, vorzugsweise zwei an jeder Seite. Es ist eine Mastanordnung an bzw. auf dem Fahrzeug vorgesehen, die drehbar ist. Sie weist mehrere unabhängig voneinander bewegbare Teil-Mastglieder auf, so dass neben dem Drehantrieb für die Mastanordnung auch jedes der Teil-Mastglieder vorteilhaft einen eigenen Hydraulikantrieb aufweist. Diese Hydraulikantriebe sind Teil einer hydraulischen Antriebsanordnung, die für die mindestens eine Abstützvorrichtung und die Mastanordnung vorgesehen ist. Die mehreren Hydraulikantriebe können jeweils die Bewegung jeder Abstützvorrichtung und jedes der bewegbaren Teil-Mastglieder übernehmen, vorteilhaft als Hydraulikzylinder. Ein Hydraulikantrieb ist eben vorteilhaft auch zum Drehen der Mastanordnung gegenüber dem Fahrzeug vorgesehen, der speziell dazu ausgebildet ist.

Zur Ansteuerung der hydraulischen Antriebsanordnung ist eine vorgenannte Ventilanordnung vorgesehen, die auf an sich bekannte Art und Weise die Hydraulikantriebe der hydraulischen Antriebsanordnung ansteuert. So kann jede Abstützvorrichtung und/oder jedes der Teil-Mastglieder und somit die gesamte Mastanordnung bewegt werden.

Erfindungsgemäß ist vorgesehen, dass die Ventilanordnung eine Gruppe von Proportionalventilen aufweist, also mindestens zwei Proportionalventile, mit denen die hydraulische Antriebsanordnung beaufschlagt werden kann bzw. die für die Steuerung der hydraulischen Antriebsanordnung ausgebildet sind. Durch die Ausbildung als Proportionalventile kann eine solche Steuerung sehr feinfühlig und genau erfolgen. So können die Hydraulikantriebe der Antriebsanordnung gut gesteuert werden, um wiederum die davon angetriebenen Funktionseinheiten der mindestens einen Abstützvorrichtung und der Teil-Mastglieder gut steuern bzw. bewegen zu können. Die Ventilanordnung weist des Weiteren eine Gruppe von Umschaltventileinrichtungen auf, also mindestens zwei Umschaltventileinrichtungen, die jeweils mit mindestens einem Hydraulikantrieb verbunden sind, also mit einem Hydraulikantrieb der mindestens einen Abstützvorrichtung oder der Teil-Mastglieder. Die genannten Umschaltventileinrichtungen sind den Proportionalventilen nachgeschaltet, wobei genau eine Umschaltventileinrichtung oder mehrere Umschaltventileinrichtungen von je genau einem Proportionalventil versorgt sind bzw. je genau einem einzigen Proportionalventil nachgeschaltet sind. Dabei sind die Ausgänge von mindestens zwei Proportionalventilen ausschließlich an Eingänge der Umschaltventileinrichtungen geführt, also von diesen beiden Proportionalventilen noch nicht direkt an einen der Hydraulikantriebe geführt. Dies bedeutet also, dass mit der Erfindung erreicht werden kann, dass zumindest für zwei Proportionalventile, vorteilhaft für noch mehr Proportionalventile der Ventilanordnung, eine Umschaltventileinrichtung nachgeordnet ist, die sozusagen die Steuerung der Bewegung der Proportionalventile an verschiedene Hydraulikantriebe lenken kann. Dadurch kann die Zahl der aufwändigen Proportionalventile reduziert werden, und durch die diesen Proportionalventilen nachgeschalteten Umschaltventileinrichtungen kann die Steuerung der Bewegung bzw. konkret die Hydraulikflüssigkeit an denjenigen Hydraulikantrieb gegeben werden, der angetrieben werden soll. Dann ist zwar vor einem Betätigen oder Aktivieren eines Hydraulikantriebs dieser erst mittels der Umschaltventileinrichtung anzusteuern oder einzustellen, der konstruktive Aufwand insgesamt kann aber deutlich reduziert werden.

Bevorzugt weist das Fahrzeug selbst eine Dickstoffpumpe auf oder kann mit einer solchen verbunden werden, die Dickstoff bzw. Beton in eine Rohrleitung pumpt, die an der Mastanordnung befestigt ist. Dies ist bekannt.

Vorteilhaft sind die Ausgänge von allen Proportionalventilen ausschließlich an Eingänge der Umschaltventileinrichtungen geführt, so dass die Zahl der benötigten Proportionalventile maximal reduziert werden kann.

In weiterer vorteilhafter Ausgestaltung der Erfindung kann jeweils genau einem einzigen Proportionalventil genau eine einzige Umschaltventileinrichtung nachgeschaltet sein, also von diesem versorgt werden. Dies kann besonders vorteilhaft für jedes Proportionalventil der Ventilanordnung vorgesehen sein, so dass jeweils genau einem einzigen Proportionalventil genau eine einzige Umschaltventileinrichtung nachgeschaltet ist. Diese Umschaltventileinrichtungen können dann ähnlich oder identisch ausgebildet sein und ähnlich gruppiert werden, was im Folgenden noch näher erläutert wird.

Es kann nämlich vorteilhaft vorgesehen sein, dass sämtliche Umschaltventileinrichtungen untereinander die gleichen Einstellmöglichkeiten und Umstellmöglichkeiten aufweisen, so dass sie einander funktional entsprechen. In nochmals weiterer vorteilhafter Ausgestaltung der Erfindung kann vorgesehen sein, dass sämtliche Umschaltventileinrichtungen identisch sind. So können Kosten und Aufwand bei der Herstellung und vor allem auch bei der Reparatur verringert werden, weil die benötigte Teilevielfalt geringer wird.

In nochmals weiterer Ausgestaltung der Erfindung kann vorgesehen sein, dass sämtliche Proportionalventile untereinander ebenfalls die gleichen Einstellmöglichkeiten und Umstellmöglichkeiten aufweisen, besonders vorteilhaft auch identisch sind. Damit lässt sich ebenfalls der vorgenannte Vorteil eines verringerten Aufwands erreichen.

In alternativer Ausgestaltung kann zur besseren Anpassung an den jeweiligen Anwendungszweck vorgesehen sein, dass die Proportionalventile unterschiedlich sind, vorteilhaft können mindestens zwei unterschiedliche Arten von Proportionalventilen vorgesehen sein. Diese können insbesondere hinsichtlich einer Schieberbestückung variieren, was sich besonders bevorzugt auf deren Ölmengeneinstellung bzw. Durchlass und/oder auf eine Mittelstellung eines Schiebers dieser Proportionalventile auswirken kann, allgemein für die Hydraulikflüssigkeit. So kann es beispielsweise vorgesehen sein, dass manche Proportionalventile für größere Mengen an Hydraulikflüssigkeit als Durchsatz ausgelegt sind, weil die davon ansteuerbaren Hydraulikantriebe einen größeren Durchsatz benötigen.

Bei der Erfindung ist vorgesehen, dass jede der Umschaltventileinrichtungen zwischen zwei Abgängen und fünf Abgängen aufweist. Dabei sind es genau drei Abgänge, so dass sich die technische Komplexität einer Umschaltventileinrichtung in technisch sinnvollen Grenzen bewegt. Jeder der Abgänge einer Umschaltventileinrichtung weist zwei Anschlüsse auf, die an oder in die Umschaltventileinrichtung führen. Damit kann jeder Abgang vorteilhaft zu einem der Hydraulikantriebe der Abstützvorrichtungen oder zu einem der Hydraulikantriebe der Mastanordnung führen. So ist bei der Erfindung vorgesehen, dass bei jeder Umschaltventileinrichtung genau zwei Abgänge zu Hydraulikantrieben der Abstützvorrichtung führen und genau ein Abgang zu Hydraulikantrieben der Mastanordnung. Bei diesen zwei Abgängen zu den Hydraulikantrieben der mindestens einen Abstützvorrichtung, vorzugsweise zu mehreren Abstützvorrichtungen, kann vorgesehen sein, dass mindestens eine Abstützvorrichtung auf jeder Seite des Fahrzeugs angeordnet ist, vorteilhaft auf jeder Seite zwei Abstützvorrichtungen. Dann können diese Abstützvorrichtungen gruppiert werden in eine linke Seite des Fahrzeugs und in eine rechte Seite des Fahrzeugs. So kann vor allem im Fall von zwei Abstützvorrichtungen an jeder Seite mittels der Umschaltventileinrichtungen eingestellt werden, dass zu genau einem Zeitpunkt nur die Abstützvorrichtungen auf der linken Seite oder nur die Abstützvorrichtungen auf der rechten Seite bedient bzw. bewegt werden können. Die Proportionalventile sind dann mittels der Umschaltventileinrichtungen nur mit diesen Untergruppen von Abstützvorrichtungen verbunden, wodurch ein Ausrichten des Fahrzeugs leichter möglich ist und vor allem Bedienfehler verringert werden können. In entsprechender Form kann dann vorgesehen sein, dass in einer Stellung der Umschaltventileinrichtungen nur die Hydraulikantriebe der Mastanordnung bewegbar bzw. ansteuerbar sind, so dass keinerlei negative Auswirkung auf die Ausrichtung bzw. Abstützung des Fahrzeugs möglich ist, während im hauptsächlichen Betrieb des Fahrzeugs eigentlich die Mastanordnung bewegt werden soll.

Erfindungsgemäß ist vorgesehen, dass die mehreren Abgänge an jeder Umschaltventileinrichtung in einer Reihe angeordnet sind, und zwar sämtliche Abgänge dieser Umschaltventileinrichtung. So ist vorgesehen, dass die Abgänge am Anfang der Reihe und am Ende der Reihe jeweils zu einem der Hydraulikantriebe der Abstützvorrichtungen führen. Ein mittlerer Abgang der Reihe führt dann zu einem der Hydraulikantriebe der Mastanordnung. Die Hydraulikantriebe am Anfang der Reihe und am Ende der Reihe sind dann vorteilhaft zu Abstützvorrichtungen auf jeweils der linken oder jeweils der rechten Seite des Fahrzeugs geführt.

Es ist vorteilhaft vorgesehen, dass der Gruppe von Proportionalventilen ein Wahlbetriebsartenventil vorgeschaltet ist, und zwar zwischen der Gruppe von Proportionalventilen und einer Ölpumpe bzw. Pumpe für Hydraulikflüssigkeit. Besonders vorteilhaft kann vorgesehen sein, dass nur eine einzige Einspeisung mit der Ölpumpe vorgesehen ist, wobei hier noch ein Eingangsmodul vor dem Wahlbetriebsartenventil vorgeschaltet sein kann. Ein solches Wahlbetriebsartenventil ist bevorzugt dazu ausgebildet, die Umschaltventileinrichtungen umzustellen. Insbesondere kann das Wahlbetriebsartenventil dazu ausgebildet sein, mehrere oder vorteilhaft alle Umschaltventileinrichtungen gleichzeitig und gleichartig umzustellen zwischen jeweils einer Stellung für einen Abgang. Auf die vorgenannte Ausbildung der Umschaltventileinrichtungen mit Reihen von Abgängen bezogen bedeutet dies, dass sie gleichzeitig und gleichartig umgestellt werden zwischen jeweils einer Stellung für einen dieser Abgänge. Dabei kann in nochmals weiterer Ausgestaltung der Erfindung vorgesehen sein, dass ein Umstellen der Umschaltventileinrichtungen mittels des genannten Wahlbetriebsartenventils diese Umschaltventileinrichtungen entweder zur Ansteuerung von Hydraulikantrieben nur der Abstützvorrichtungen einerseits oder zur Ansteuerung von Hydraulikantrieben nur der Mastanordnung andererseits umstellt. Somit gibt es sozusagen eine Abstütz-Betriebsart und eine Mast-Betriebsart, wobei die Abstütz-Betriebsart noch unterteilt sein kann in eine linke Seite und eine rechte Seite des Fahrzeugs.

Somit können die Hydraulikantriebe in den Abstützvorrichtungen in mindestens zwei Gruppen unterteilt werden, vorteilhaft in genau zwei Gruppen, nämlich linke Seite des Fahrzeugs und rechte Seite des Fahrzeugs. Dadurch kann vorteilhaft erreicht werden, dass auf beiden Seiten keine Abstützvorrichtung gemeinsam oder gleichzeitig einstellbar ist, sondern eben nur auf der einen Seite oder nur auf der anderen Seite. So lässt sich die Sicherheit bei der Bedienung des Fahrzeugs bzw. einer Dickstoffpumpe, insbesondere bei der sehr sicherheitsrelevanten Abstützung des Fahrzeugs, verbessern.

In vorteilhafter Ausgestaltung der Erfindung ist eine Überwachungseinrichtung vorgesehen, die dazu ausgebildet ist, festzustellen, ob alle Umschaltventileinrichtungen in derselben Stellung sind. Dann können sie nämlich, wie zuvor beschrieben worden ist, nur Hydraulikantriebe der Abstützvorrichtungen einerseits oder nur Hydraulikantriebe der Mastanordnung andererseits ansteuern bzw. eine unterteilte Gruppe von Hydraulikantrieben ansteuern. Diese Überwachungseinrichtung soll also zusätzlich dazu dienen, die vorgenannte Erhöhung der Sicherheit sicherzustellen bzw. zu überwachen. Dabei ist vorteilhaft vorgesehen, dass die Überwachungseinrichtung für den Fall, dass nicht alle Umschaltventileinrichtungen in derselben Stellung sind, ein Sicherheitsventil schließt. Dieses Sicherheitsventil wiederum ist den Proportionalventilen vorgeschaltet, bevorzugt auch dem Wahlbetriebsartenventil vorgeschaltet. So kann die gesamte Ventilanordnung keine Druckänderung bzw. keine Ansteuerung veranlassen für einen der Hydraulikantriebe der hydraulischen Antriebsanordnung, wenn nicht sämtliche Umschaltventileinrichtungen in derselben Stellung sind.

In einer ersten Ausgestaltung der Erfindung kann die genannte Überwachungseinrichtung Mittel für eine hydraulische Rückmeldung aufweisen, insbesondere eine Hydraulikleitung. Diese Mittel zur hydraulischen Rückmeldung führen von jeder Umschaltventileinrichtung durch alle Vorwahlschieber der Umschaltventileinrichtungen derart, dass sie eine durchgehende bzw. offene Rückmeldungsleitung zu dem Sicherheitsventil bilden. Diese Rückmeldungsleitung ist eben offen für denjenigen Fall, dass alle Vorwahlschieber aller Umschaltventileinrichtungen in derselben Stellung sind. Die Rückmeldungsleitung ist unterbrochen für denjenigen Fall, dass mindestens ein Vorwahlschieber einer Umschaltventileinrichtung in einer anderen Stellung ist als mindestens ein Vorwahlschieber einer anderen Umschaltventileinrichtung, also wenn sich die Stellung eines Vorwahlschiebers von einer Stellung eines der anderen Vorwahlschieber unterscheidet. Bei dieser unterbrochenen Rückmeldungsleitung schließt das Sicherheitsventil, so dass auch die Proportionalventile nicht angesteuert werden können bzw. kein hydraulischer Antrieb erfolgen kann.

In einer zweiten Ausgestaltung der Erfindung weist die Überwachungseinrichtung zwar auch Mittel zur Rückmeldung auf, diese Mittel sind allerdings elektrisch ausgebildet bzw. zur elektrischen Rückmeldung ausgebildet. Auch hier kann eine elektrische Leitung als Rückmeldungsleitung durch alle Vorwahlschieber der Umschaltventileinrichtungen führen, beispielsweise durch entsprechende elektrische Schalter oder Kontaktmittel gebildet sein, so dass die elektrische Rückmeldungsleitung durchgehend bzw. als elektrischer Kontakt geschlossen ist für den Fall, dass alle Vorwahlschieber aller Umschaltventileinrichtungen in derselben Stellung sind. Eine elektrische Rückmeldung ist unterbrochen für den anderen Fall, dass nicht sämtliche Vorwahlschieber der Umschaltventileinrichtungen in einer bzw. in derselben Stellung sind.

Im Vergleich der beiden vorgenannten Möglichkeiten zur Ausbildung der Rückmeldung ist eine hydraulische Rückmeldung funktionssicherer, da eben die Bedingung erfüllt sein muss, dass sämtliche Vorwahlschieber der Umschaltventileinrichtung in derselben Stellung sind. Wenn diese Bedingung nicht erfüllt ist, was bei einer Fehlfunktion der hydraulischen Rückmeldung kaum der Fall sein kann, können die Hydraulikantriebe nicht betätigt werden. Bei einer elektrischen Rückmeldung könnte eine Durchkontaktierung möglicherweise auch durch andere Fehler entstehen, wobei die Wahrscheinlichkeit hierfür gering ist und baulich-konstruktiv noch weiter reduziert werden kann.

Vorteilhaft ist vorgesehen, dass die Umschaltventileinrichtungen und/oder das vorgenannte Wahlbetriebsartenventil mittels einer Ansteuereinrichtung elektrisch angesteuert werden können. Dies erfolgt besonders vorteilhaft elektrohydraulisch, um auch mögliche Betätigungskräfte gut aufbringen zu können.

Eine Ansteuereinrichtung kann Bedienelemente für eine Bedienperson aufweisen, beispielsweise Druckknöpfe oder Hebel, um die einzelnen Hydraulikantriebe zu betätigen. Die Bedienelemente der Ansteuereinrichtung sind vorteilhaft zentral bzw. gemeinsam vorgesehen, beispielsweise an einer sogenannten zentralen Bedienstelle. Somit kann hier eine Bedienperson die eingangs genannten Funktionseinheiten der mindestens einen Abstützeinrichtung und der Mastanordnung steuern, und zwar relativ komfortabel eben an einer Stelle. Eine solche Ansteuereinrichtung kann vorteilhaft ein Stück von der mindestens einen Abstützvorrichtung und der Mastanordnung entfernt sein aus Gründen der Betriebssicherheit bzw. Unfallvermeidung, möglicherweise auch um einen besseren Bedienüberblick zu haben. Die Ansteuereinrichtung kann eine Art Schaltpult oder Bedienpult aufweisen, wie es an sich bekannt ist. Sie kann auch als Funkfernsteuerung und somit mobil ausgebildet sein, um sie auch in einiger Entfernung vom Fahrzeug benutzen zu können.

In weiterer vorteilhafter Ausgestaltung der Erfindung kann vorgesehen sein, dass die Ventilanordnung einen gemeinsamen Ventilträger aufweist. So können vorteilhaft sämtliche Proportionalventile und sämtliche Umschaltventileinrichtungen an dem gemeinsamen Ventilträger angeordnet sein. Dadurch ist eine hydraulische Verbindung einfach möglich. Auch das vorgenannte Wahlbetriebsartenventil kann hier vorgesehen sein. Der Ventilträger kann vorteilhaft eine Trägerplatte aufweisen, um darauf die genannten Proportionalventile und Umschaltventileinrichtungen zu befestigen. Somit ist eine Zuleitung von Hydraulikflüssigkeit von der vorgenannten Ölpumpe gut möglich. Des Weiteren kann auch die zuvor beschriebene vorteilhafte Überwachungseinrichtung mit den beiden Möglichkeiten für eine Rückmeldung gut aufgebaut sein, da eben die Umschaltventileinrichtungen nahe beieinander vorgesehen sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen schematisch dargestellt und wird im Folgenden näher erläutert. In den Zeichnungen zeigen:
- Fig. 1: eine vereinfachte schematische Darstellung eines erfindungsgemäßen Fahrzeugs als sogenannte Betonpumpe mit Abstützungen und einer Mastanordnung,
- Fig. 2: eine stark vereinfachte Darstellung einer erfindungsgemäßen Ventilanordnung für das Fahrzeug aus Fig. 1 mit einer Gruppe von Proportionalventilen, der eine Gruppe von Umschaltventilen nachgeschaltet ist,
- Fig. 3: eine detaillierte Darstellung des Aufbaus der Hydraulikanordnung samt verschiedenen Ansteuermöglichkeiten für die Abstützungen und die Mastanordnung und

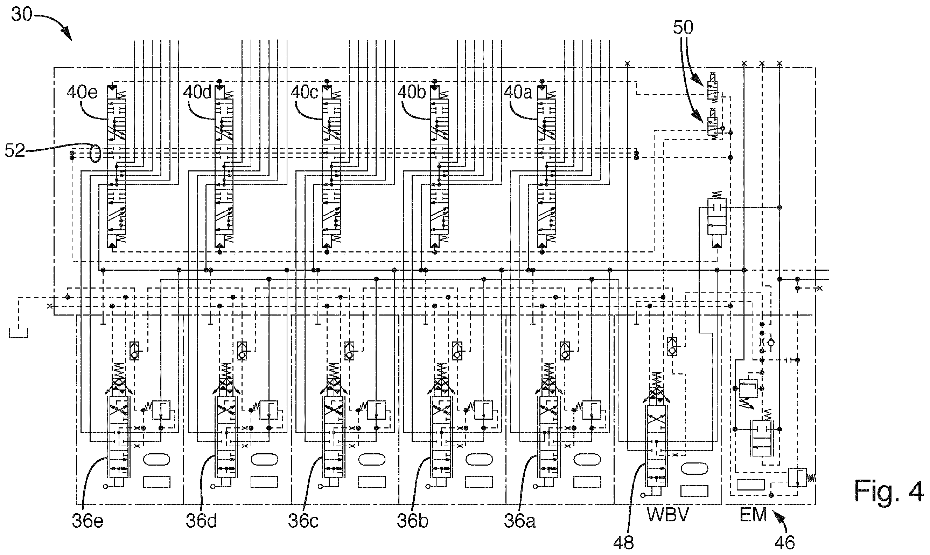

- Fig. 4: eine etwas vergrößerte Darstellung der Ventilanordnung aus Fig. 3.

### DETAILLIERTE BESCHREIBUNG DER AUSFÜHRUNGSBEISPIELE

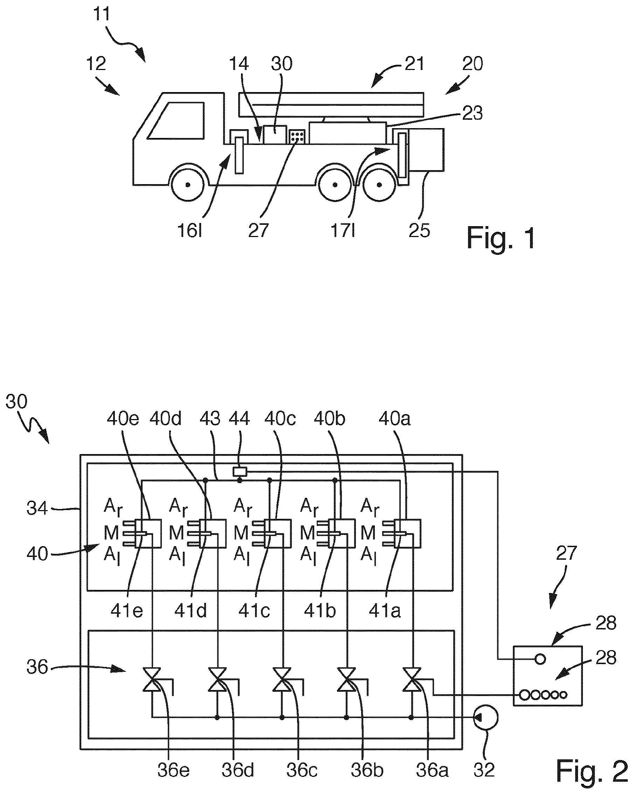

In der Fig. 1 ist ein Fahrzeug 11 dargestellt, welches auch als sogenannte Betonpumpe bekannt ist. Das Fahrzeug 11 weist eine Fahrerkabine 12 vorne und hinten eine große Nutzfläche 14 auf. An der Nutzfläche sind zwei Abstützungen 16 vorne und zwei Abstützungen 17 hinten vorgesehen, zwei auf jeder Seite, die auf bekannte Art und Weise ausgebildet sind. Eine Abstützung 16l vorne links ist dargestellt, die auch noch in ihrer Länge unterschiedlich weit ausgefahren werden kann, wie nachfolgend noch verdeutlicht wird. Hinten links ist eine Abstützung 17l vorgesehen. Beide Abstützungen 16 und 17 können in einer horizontalen Ebene in einem gewissen Bereich geschwenkt werden und unterschiedlich weit nach unten ausgefahren werden.

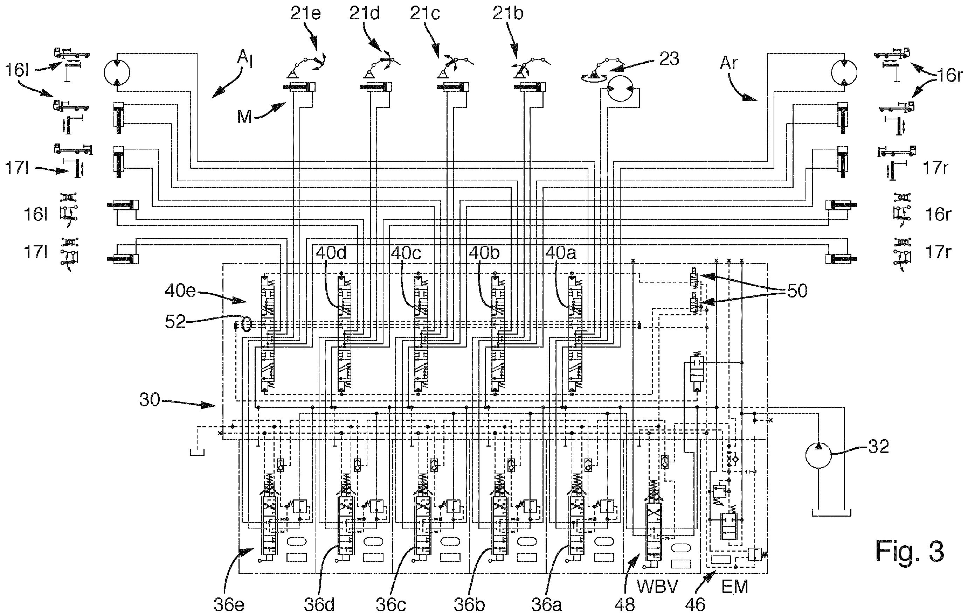

Auf der Nutzfläche 14 ist eine Mastanordnung 20 vorgesehen mit vier Mastgliedern 21b bis 21e auf einem Drehteller 23. Die Mastglieder 21b-e sind zusammengefaltet für den Transport, in der Fig. 3 sind sie zumindest schematisch auseinandergefaltet.

Hinten an dem Fahrzeug 11 ist ein Pumpmodul 25 vorgesehen, in welches Beton von oben eingefüllt wird und welches dann auf bekannte Art und Weise diesen eingefüllten Beton oder allgemein Dickstoff durch eine bewegbare Leitung entlang der Mastanordnung 20 bzw. deren Mastglieder 21 pumpt.

Des Weiteren ist an der Nutzfläche 14 ein Bedienfeld 27 als eingangs genannte Ansteuereinrichtung oder Bedienstelle vorgesehen. Daneben ist eine Ventilanordnung 30 schematisch dargestellt, die aber nicht zwingend sichtbar sein muss. Deren Ventile werden mittels des Bedienfelds 27 angesteuert.

In der vereinfachten Darstellung gemäß Fig. 2 ist eine Ventilanordnung 30 im Detail dargestellt. Rechts unten ist eine Hydraulikpumpe 32 dargestellt, die Hydraulikflüssigkeit mit Druck in die Ventilanordnung 30 pumpt. Die Ventilanordnung 30 weist eine Ventilträgerplatte 34 auf, auf der im unteren Bereich Proportionalventile 36 angeordnet bzw. montiert sind, und im oberen Bereich Umschaltventile 40 als Gruppe.

Jedes der Proportionalventile 36a bis 36e, die jeweils eine Ansteuerung 37a bis 37e aufweisen, geht an jeweils genau ein nachgeschaltetes Umschaltventil 40a bis 40e, und zwar direkt. Die Proportionalventile 36a bis 36e und die Umschaltventile 40a bis 40e sind dabei jeweils identisch ausgebildet. Die Proportionalventile 36a bis 36e sind vorteilhaft als druckkompensierte Proportionalventile ausgebildet.

Die Umschaltventile 40a bis 40e weisen jeweils drei Ausgänge auf, die bei allen Umschaltventilen gleich angeordnet sind. Mittels eines verstellbaren Schiebers 41a bis 41e pro Umschaltventil 40a bis 40e kann zwischen den drei Ausgängen umgestellt werden. Sämtliche Schieber 41a bis 41e werden gleichzeitig von einer gemeinsamen Betätigungseinrichtung 43 bewegt und auch gleichartig bewegt. Hierfür ist ein Aktor 44 vorgesehen. Der Aktor 44 ist ebenso wie die Ansteuerung 37a bis 37e der Proportionalventile 36 mit jeweils einem von mehreren Bedienelementen 28 des Bedienfelds 27 verbunden zur Ansteuerung.

Der unterste Abgang der Umschaltventile 40a bis 40e geht an die Gruppe Al der linken Abstützungen 16l und 17l. Die mittleren Abgänge M gehen sämtlich an die Mastanordnung 20 samt Drehteller 23. Die obersten Abgänge Ar gehen an die in Fig. 3 rechts oben dargestellten rechten Abstützungen 16r und 17r.

Durch die erfindungsgemäße und vorbeschriebene gleichzeitige Verstellung innerhalb der Umschaltventile 40a bis 40e ist somit gewährleistet, dass entweder nur die linken Abstützungen, nur die Mastanordnung samt Drehteller oder nur die rechten Abstützungen angesteuert werden können bzw. deren Hydraulikantriebe. Eine eingangs erläuterte Rückmeldungsleitung oder Rückmeldung ist hier noch nicht installiert bzw. nicht dargestellt.

In der in Fig. 2 dargestellten Stellung der Schieber 41a bis 41e in der Mittelstellung für die Mastanordnung 20 bzw. den Drehteller 23 kann mittels der Proportionalventile 36a bis 36e jeweils ein Hydraulikantrieb der Mastanordnung 20 oder des Drehtellers 23 angetrieben werden. Dies ist in Fig. 3 oben in der Mitte gut zu erkennen. Das erste Umschaltventil 40a ist für den Drehteller 23 zuständig in der mittleren Stellung für die Mastanordnung M. In der unteren Stellung ist es für die rechten Abstützungen Ar zuständig, und zwar für das horizontale Herausfahren der vorderen rechten Abstützung 16r. In der obersten Stellung ist es für das horizontale Herausfahren der linken vorderen Abstützung 16l zuständig bzw. steuert den entsprechenden Hydraulikantrieb an. Befindet sich das Umschaltventil 40a in einer der drei Stellungen, so kann dann durch entsprechende Betätigung des genau und direkt zugeordneten Proportionalventils 36a mittels des Bedienfelds 27 entweder der Drehteller 23 mit der Mastanordnung 20 darauf in die eine oder in die andere Richtung gedreht werden. In einer der beiden anderen Stellungen kann entweder die linke vordere Abstützung 16l oder die rechte vordere Abstützung 16r in horizontaler Richtung weiter heraus oder weiter hinein gefahren werden. Dabei ist klar, dass vor Umstellen des Umschaltventils 40 das zugehörige Proportionalventil 36 drucklos sein muss.

Das zweite Umschaltventil 40b ist in der mittleren Stellung M mit dem ersten untersten Mastglied 21b bzw. dessen Hydraulikantrieb verbunden. In der oberen Stellung ist es mit der linken vorderen Abstützung 16l verbunden bzw. dem Hydraulikantrieb, um diese in vertikaler Richtung nach unten auszufahren. In der unteren Stellung ist es mit dem Hydraulikantrieb der rechten vorderen Abstützung 16r verbunden, um diese in vertikaler Richtung zu bewegen.

Das dritte Umschaltventil 40c ist in der mittleren Stellung M mit dem zweiten Mastglied 21c bzw. dessen Hydraulikantrieb verbunden, wie zu erkennen ist. In der oberen Stellung ist es mit dem Hydraulikantrieb der linken hinteren Abstützung 17l verbunden, um diese in vertikaler Richtung auszufahren. In der unteren Stellung ist es mit dem Hydraulikantrieb der rechten hinteren Abstützung 17r verbunden zur vertikalen Bewegung.

Das vierte Umschaltventil 40d ist in der mittleren Stellung M mit dem dritten Mastglied 21d bzw. dessen Hydraulikantrieb verbunden. In der oberen Stellung ist es mit einem Hydraulikantrieb zum horizontalen Schwenken der linken vorderen Abstützung 16l verbunden. In der unteren Stellung ist es mit dem Hydraulikantrieb für die rechte vordere Abstützung 16r verbunden, um diese in horizontaler Ebene hin- und herzuschwenken.

Das fünfte Umschaltventil 40e ist in der mittleren Stellung M mit dem Hydraulikantrieb für das vierte letzte Mastglied 21e verbunden. In der oberen Stellung ist es mit dem Hydraulikantrieb für die linke hintere Abstützung 171 verbunden, um diese in horizontaler Ebene zu schwenken. In der untersten Position seines Schiebers ist es mit dem Hydraulikantrieb für die rechte hintere Abstützung 17r verbunden, um diese in der horizontalen Ebene zu schwenken.

Somit ist klar, dass in jeder der drei Stellungen der Schieber 41 der Umschaltventile 40 entweder die Mastanordnung 20 bzw. deren vier Mastglieder 21b bis 21e oder der Drehteller 23 angesteuert werden können bzw. deren Hydraulikantriebe. In einer weiteren Stellung können sämtliche Abstützungen 16l und 171 an der linken Seite des Fahrzeugs 11 bewegt werden, und in einer nochmals weiteren Stellung können sämtliche rechten Abstützungen 16r und 17r bewegt werden.

Aus der zuvor schon zum Teil beschriebenen detaillierten Darstellung der Ventilanordnung 30 ist der genaue hydraulische Schaltplan zu erkennen. Es ist zu erkennen, wie jedem Proportionalventil 36a bis 36e jeweils genau ein einziges Umschaltventil 40a bis 40e direkt nachgeschaltet ist. Die Proportionalventile 36a bis 36e und die Umschaltventile 40a bis 40e sind auch tatsächlich vorteilhaft auf einer gemeinsamen Ventilträgerplatte montiert, die hier nicht dargestellt ist. Die Ventilanordnung 30 weist hier vorteilhaft auch noch unten rechts ein Eingangsmodul 46 auf und, diesem nachgeschaltet, ein Wahlbetriebsartenventil 48. Oben rechts sind zwei elektrische Vorsteuerventile 50 vorgesehen.

Um sicherzustellen, wie eingangs erläutert worden ist, dass sämtliche Umschaltventile 40a bis 40e bzw. ihre Schieber 41a bis 41e in derselben Stellung sind, so dass eine Bedienperson genau weiß, welcher Hydraulikantrieb bzw. welche Funktionseinheit durch Betätigen des entsprechenden Proportionalventils 36a bis 36e über das Bedienfeld 27 betätigt wird, ist hier eine hydraulische Rückmeldung 52 gestrichelt dargestellt. Sie geht durch sämtliche Umschaltventile 40a bis 40e hindurch, und ist nur dann geschlossen, wenn sämtliche Umschaltventile 40a bis 40e tatsächlich in derselben Stellung sind. Nur dann ist jeweils eine der vorgenannten Gruppen angesteuert. Ansonsten ist die hydraulische Rückmeldung unterbrochen, und als Folge davon kann vorgesehen sein, dass keines der Proportionalventile 36a bis 36e geöffnet werden kann. Des Weiteren sollte eine Störungsmeldung optisch und/oder akustisch ausgegeben werden, am besten mindestens auf dem Bedienfeld 27, besonders vorteilhaft aber auch noch an weiterer Stelle.

Durch das direkte Nachschalten der Umschaltventile 40a bis 40e hinter die Proportionalventile 36a bis 36e, vorteilhaft mit kurzen Leitungslängen dazwischen, kann eine kompakte, leicht zu überschauende und leicht zu wartende Ventilanordnung 30 geschaffen werden.

## Patentansprüche

1. Fahrzeug (11) für eine Dickstoffpumpeneinrichtung (25), wobei das Fahrzeug aufweist:
- mindestens zwei Abstützvorrichtungen (16, 17) zum Abstützen und/oder Ausrichten des Fahrzeugs (11),
- eine Mastanordnung (20), die drehbar ist und die mehrere unabhängig voneinander bewegbare Teil-Mastglieder (21) aufweist,
- eine hydraulische Antriebsanordnung für die Abstützvorrichtungen (16, 17) und die Mastanordnung (20), die für jeweils die Bewegung der Abstützvorrichtungen und der bewegbaren Teil-Mastglieder (21) Hydraulikantriebe aufweist,
- eine Ventilanordnung (30), um mittels der hydraulischen Antriebsanordnung (32) und deren Hydraulikantrieben eine der Abstützvorrichtungen (16, 17) und/oder eines der Teil-Mastglieder (21) zu bewegen,
wobei
- die Ventilanordnung (30) eine Gruppe von Proportionalventilen (36) aufweist für die Steuerung der hydraulischen Antriebsanordnung,
- die Ventilanordnung (30) eine Gruppe von Umschaltventileinrichtungen (40) aufweist, die jeweils mit mindestens einem Hydraulikantrieb der Abstützvorrichtungen (16, 17) oder der Teil-Mastglieder (21) verbunden sind,
- die Umschaltventileinrichtungen (40) den Proportionalventilen (36) nachgeschaltet sind,
- genau eine Umschaltventileinrichtung (40) oder mehrere Umschaltventileinrichtungen von genau einem Proportionalventil (36) versorgt sind bzw. genau einem einzigen Proportionalventil nachgeschaltet sind,
- Ausgänge der Proportionalventile (36) ausschließlich an Eingänge der Umschaltventileinrichtungen (40) führen,
- jede der Umschaltventileinrichtungen (40) zwischen zwei und fünf Abgänge (AI, Ar, M) aufweist, wobei jeder Abgang zu einem der Hydraulikantriebe der Abstützvorrichtungen (16, 17) oder der Mastanordnung (20) führt,
**dadurch gekennzeichnet, dass**
- bei jeder Umschaltventileinrichtung (40) genau zwei Abgänge (AI, Ar) zu den Hydraulikantrieben der Abstützvorrichtungen (16, 17) führen und genau ein Abgang (M) zu den Hydraulikantrieben der Mastanordnung (20) führt,
- die mehreren Abgänge (AI, Ar, M) an jeder Umschaltventileinrichtung (40) in einer Reihe angeordnet sind,
- die Abgänge (Al, Ar) am Anfang der Reihe und am Ende der Reihe zu einem der Hydraulikantriebe der Abstützvorrichtungen (16, 17) führen,
- ein mittlerer Abgang (M) der Reihe zu einem der Hydraulikantriebe der Mastanordnung (20) führt.

2. Fahrzeug nach Anspruch 1, **dadurch gekennzeichnet, dass** jeweils genau einem einzigen Proportionalventil (36) genau eine einzige Umschaltventileinrichtung (40) nachgeschaltet ist, insbesondere jedem einzigen Proportionalventil (36) genau eine einzige Umschaltventileinrichtung (40) nachgeschaltet ist.

3. Fahrzeug nach Anspruch 1 oder 2, **dadurch gekennzeichnet, dass** sämtliche Umschaltventileinrichtungen (40) untereinander die gleichen Einstellmöglichkeiten und Umstellmöglichkeiten aufweisen, insbesondere identisch sind.

4. Fahrzeug nach einem der vorhergehenden Ansprüche, **dadurch gekennzeichnet, dass** sämtliche Proportionalventile (36) untereinander die gleichen Einstellmöglichkeiten und Umstellmöglichkeiten aufweisen, insbesondere identisch sind.

5. Fahrzeug nach einem der vorhergehenden Ansprüche, **dadurch gekennzeichnet, dass** jede der Umschaltventileinrichtungen (40) drei oder vier Abgänge (AI, Ar, M) aufweist.

6. Fahrzeug nach einem der vorhergehenden Ansprüche, **dadurch gekennzeichnet, dass** der Gruppe von Proportionalventilen (36) von einer Ölpumpe (32) kommend ein Wahlbetriebsartenventil (48) vorgeschaltet ist, wobei vorzugsweise eine einzige Öleinspeisung mit der Ölpumpe (32) samt einem Eingangsmodul (46) vor dem Wahlbetriebsartenventil (48) vorgeschaltet ist.

7. Einrichtung nach Anspruch 6, **dadurch gekennzeichnet, dass** das Wahlbetriebsartenventil (48) dazu ausgebildet ist, die Umschaltventileinrichtungen (40) umzustellen, insbesondere alle Umschaltventileinrichtungen gleichzeitig und gleichartig umzustellen zwischen jeweils einer Stellung für einen Abgang (AI, Ar, M).

8. Fahrzeug nach Anspruch 7, **dadurch gekennzeichnet, dass** ein Umstellen der Umschaltventileinrichtungen (40) mittels des Wahlbetriebsartenventils (48) diese Umschaltventileinrichtungen zur Ansteuerung von Hydraulikantrieben nur der Abstützvorrichtungen (16, 17) einerseits oder nur der Mastanordnung (20) andererseits umstellt.

9. Fahrzeug nach Anspruch 8, **dadurch gekennzeichnet, dass** innerhalb der Hydraulikantriebe der Abstützvorrichtungen (16, 17) eine Unterscheidung in mindestens zwei Gruppen, insbesondere in genau zwei Gruppen, vorgenommen ist, insbesondere zwischen Abstützvorrichtungen (16l, 17l) auf der linken Seite des Fahrzeugs (11) und Abstützvorrichtungen (16r, 17r) auf der rechten Seite des Fahrzeugs, wobei vorzugsweise die beiden Seiten nicht gemeinsam und/oder gleichzeitig einstellbar sind.

10. Fahrzeug nach Anspruch 8 oder 9, **dadurch gekennzeichnet, dass** eine Überwachungseinrichtung vorgesehen ist, die feststellt, ob alle Umschaltventileinrichtungen (40) in derselben Stellung sind, so dass sie gemäß Anspruch 7 nur Hydraulikantriebe der Abstützvorrichtungen (16, 17) oder nur Hydraulikantriebe der Mastanordnung (20) ansteuern bzw. eine unterteilte Gruppe von Hydraulikantrieben ansteuern, wobei vorzugsweise die Überwachungseinrichtung für den Fall, dass nicht alle Umschaltventileinrichtungen (40) in derselben Stellung sind, ein Sicherheitsventil schließt, das den Proportionalventilen (36) vorgeschaltet ist, insbesondere auch dem Wahlbetriebsartenventil (48) vorgeschaltet ist, so dass die gesamte Ventilanordnung keine Druckänderung bzw. keine Ansteuerung veranlassen kann für einen der Hydraulikantriebe der hydraulischen Antriebsanordnung.

11. Fahrzeug nach Anspruch 10, **dadurch gekennzeichnet, dass** die Überwachungseinrichtung Mittel zur hydraulischen Rückmeldung aufweist, wobei die Mittel zur hydraulischen Rückmeldung von jeder Umschaltventileinrichtung (40) durch alle Vorwahlschieber (41) der Umschaltventileinrichtungen führen derart, dass sie eine Rückmeldungsleitung zu dem Sicherheitsventil bilden, wobei die Rückmeldungsleitung offen ist für den Fall, dass alle Vorwahlschieber aller Umschaltventileinrichtungen in derselben Stellung sind, und wobei die Rückmeldungsleitung unterbrochen ist für den Fall, dass mindestens ein Vorwahlschieber (41) einer Umschaltventileinrichtung (40) in einer anderen Stellung ist als mindestens ein Vorwahlschieber einer anderen Umschaltventileinrichtung.

12. Fahrzeug nach einem der vorhergehenden Ansprüche, **dadurch gekennzeichnet, dass** die Umschaltventileinrichtungen (40) und/oder das Wahlbetriebsartenventil (48) mittels einer Ansteuereinrichtung (27) elektrisch ansteuerbar sind, insbesondere elektromotorisch, wobei die Ansteuereinrichtung Bedienelemente (28) für eine Bedienperson aufweist, wobei vorzugsweise die Ansteuereinrichtung (27) an einer zentralen gemeinsamen Stelle des Fahrzeugs (11) vorgesehen ist.

13. Fahrzeug nach Anspruch 12, **dadurch gekennzeichnet, dass** die Ansteuereinrichtung (27) mindestens 1 m von den Abstützvorrichtungen (16, 17) und der Mastanordnung (20) entfernt ist.

14. Fahrzeug nach einem der vorhergehenden Ansprüche, **dadurch gekennzeichnet, dass** die Ventilanordnung (30) an einem gemeinsamen Ventilträger angeordnet ist, insbesondere sämtliche Proportionalventile (36) und sämtliche Umschaltventileinrichtungen (40) an dem gemeinsamen Ventilträger angeordnet sind, wobei vorzugsweise der Ventilträger eine Trägerplatte (34) aufweist zur Befestigung der Proportionalventile (36) und Umschaltventileinrichtungen (40).

## Claims

1. Vehicle (11) for a thick material pump device (25), wherein the vehicle comprises:
- at least two support devices (16, 17) for supporting and/or aligning the vehicle (11),
- a mast arrangement (20) which is rotatable and has several independently movable partial mast members (21),
- a hydraulic drive arrangement for the support devices (16, 17) and the mast arrangement (20), which has hydraulic drives for moving the support devices and the movable partial mast members (21),
- a valve arrangement (30) for moving one of the support devices (16, 17) and/or one of the partial mast members (21) by means of the hydraulic drive arrangement (32) and its hydraulic drives,
wherein
- the valve arrangement (30) has a group of proportional valves (36) for controlling the hydraulic drive arrangement,
- the valve arrangement (30) has a group of switchover valve devices (40) which are each connected to at least one hydraulic drive of the support devices (16, 17) or of the partial mast members (21),
- the switchover valve devices (40) are connected downstream of the proportional valves (36),
- exactly one switchover valve device (40) or several switchover valve devices are supplied by exactly one proportional valve (36) or are connected downstream of exactly one single proportional valve,
- outputs of the proportional valves (36) lead exclusively to inputs of the switchover valve devices (40),
- each of the switchover valve devices (40) has between two and five outputs (Al, Ar, M), each output leading to one of the hydraulic drives of the support devices (16, 17) or the mast arrangement (20),
**characterized in that**
- in each switchover valve device (40), exactly two outputs (Al, Ar) lead to the hydraulic drives of the support devices (16, 17) and exactly one output (M) leads to the hydraulic drives of the mast arrangement (20),
- the multiple outputs (Al, Ar, M) on each switchover valve device (40) are arranged in a row,
- the outputs (Al, Ar) at the beginning of the row and at the end of the row lead to one of the hydraulic drives of the support devices (16, 17),
- a middle output (M) of the row leads to one of the hydraulic drives of the mast arrangement (20).

2. Vehicle according to claim 1, **characterized in that** exactly one single switchover valve device (40) is connected downstream of each proportional valve (36), in particular exactly one single switchover valve device (40) is connected downstream of each proportional valve (36).

3. Vehicle according to claim 1 or 2, **characterized in that** all switchover valve devices (40) have the same setting options and switching options, in particular are identical.

4. Vehicle according to one of the preceding claims, **characterized in that** all proportional valves (36) have the same setting options and switching options, in particular are identical.

5. Vehicle according to one of the preceding claims, **characterized in that** each of the switchover valve devices (40) has three or four outputs (Al, Ar, M).

6. Vehicle according to one of the preceding claims, **characterized in that** a mode selection valve (48) is connected upstream of the group of proportional valves (36) coming from an oil pump (32), wherein preferably a single oil supply with the oil pump (32) together with an input module (46) is connected upstream of the mode selection valve (48).

7. Device according to claim 6, **characterized in that** the operating mode selection valve (48) is designed to switch the switchover valve devices (40), in particular to switch all changeover valve devices simultaneously and identically between respective positions for an output (Al, Ar, M).

8. Vehicle according to claim 7, **characterized in that** switching of the switchover valve devices (40) by means of the operating mode selection valve (48) switches these changeover valve devices to control hydraulic drives only of the support devices (16, 17) on the one hand or only of the mast arrangement (20) on the other hand.

9. Vehicle according to claim 8, **characterized in that** within the hydraulic drives of the support devices (16, 17), a distinction is made between at least two groups, in particular exactly two groups, in particular between support devices (16l, 17l) on the left side of the vehicle (11) and support devices (16r, 17r) on the right side of the vehicle, wherein preferably the two sides are not adjustable together and/or simultaneously.

10. Vehicle according to claim 8 or 9, **characterized in that** a monitoring device is provided which detects whether all switchover valve devices (40) are in the same position so that, according to claim 7, they only control hydraulic drives of the support devices (16, 17) or only hydraulic drives of the mast arrangement (20) or a subdivided group of hydraulic drives, wherein, preferably, the monitoring device closes a safety valve upstream of the proportional valves (36), in particular also upstream of the mode selection valve (48), in the event that not all of the switchover valve devices (40) are in the same position, so that the entire valve arrangement cannot cause a pressure change or control for any of the hydraulic drives of the hydraulic drive arrangement.

11. Vehicle according to claim 10, **characterized in that** the monitoring device has means for hydraulic feedback, wherein the means for hydraulic feedback lead from each switchover valve device (40) through all preselection slides (41) of the switchover valve devices in such a way that they form a feedback line to the safety valve, wherein the feedback line is open in the event that all preselection slides of all changeover valve devices are in the same position, and wherein the feedback line is interrupted in the event that at least one preselection slide (41) of a switchover valve device (40) is in a different position than at least one preselection slide of another changeover valve device.

12. Vehicle according to one of the preceding claims, **characterized in that** the switchover valve devices (40) and/or the mode selection valve (48) can be electrically controlled by means of a control device (27), in particular by an electric motor, wherein the control device has operating elements (28) for an operator, wherein the control device (27) is preferably provided at a central common location of the vehicle (11).

13. Vehicle according to claim 12, **characterized in that** the control device (27) is at least 1 m away from the support devices (16, 17) and the mast arrangement (20).

14. Vehicle according to one of the preceding claims, **characterized in that** the valve arrangement (30) is arranged on a common valve carrier, in particular all proportional valves (36) and all switchover valve devices (40) are arranged on the common valve carrier, wherein the valve carrier preferably has a carrier plate (34) for fastening the proportional valves (36) and switchover valve devices (40).

## Revendications

1. Véhicule (11) pour un dispositif de pompage de matières épaisses (25), le véhicule comprenant:
- au moins deux dispositifs de support (16, 17) pour soutenir et/ou aligner le véhicule (11),
- un dispositif de mât (20) qui est rotatif et qui comprend plusieurs éléments de mât partiels (21) mobiles indépendamment les uns des autres,
- un dispositif d'entraînement hydraulique pour les dispositifs de support (16, 17) et le dispositif de mât (20), qui comporte des entraînements hydrauliques pour le déplacement des dispositifs de support et des éléments de mât partiels (21) mobiles,
- un dispositif de soupapes (30) pour déplacer, au moyen du dispositif d'entraînement hydraulique (32) et de ses entraînements hydrauliques, l'un des dispositifs de support (16, 17) et/ou l'un des éléments de mât partiels (21) mobiles,
dans lequel
- le dispositif de soupapes (30) comporte un groupe de soupapes proportionnelles (36) pour la commande du dispositif d'entraînement hydraulique,
- le dispositif de soupapes (30) comporte un groupe de dispositifs de soupapes de commutation (40) qui sont reliés chacun à au moins un entraînement hydraulique des dispositifs de support (16, 17) ou des éléments de mât partiels (21) mobiles,
- les dispositifs de soupapes de commutation (40) sont montés en aval des soupapes proportionnelles (36),
- exactement un dispositif de soupape de commutation (40) ou plusieurs dispositifs de soupape de commutation sont alimentés par exactement une soupape proportionnelle (36) ou sont montés en aval d'une seule soupape proportionnelle,
- les sorties des soupapes proportionnelles (36) mènent exclusivement aux entrées des dispositifs de soupape de commutation (40),
- chacune des dispositifs de soupapes de commutation (40) comporte entre deux et cinq sorties (AI, Ar, M), chaque sortie menant à l'un des entraînements hydrauliques des dispositifs de support (16, 17) ou du dispositif de mât (20),
**caractérisé en ce que**
- pour chaque dispositif de soupapes de commutation (40), exactement deux sorties (AI, Ar) mènent aux entraînements hydrauliques des dispositifs de support (16, 17) et exactement une sortie (M) mène aux entraînements hydrauliques du dispositif de mât (20),
- les multiples sorties (AI, Ar, M) sur chaque dispositif de soupape de commutation (40) sont disposées en une rangée,
- les sorties (AI, Ar) au début et à la fin de la rangée mènent à l'un des entraînements hydrauliques des dispositifs de support (16, 17),
- une sortie centrale (M) de la rangée mène à l'un des entraînements hydrauliques du dispositif de mât (20).

2. Véhicule selon la revendication 1, **caractérisé en ce qu'**une seule soupape proportionnelle (36) est suivie d'un seul dispositif de soupape de commutation (40), en particulier qu'une seule soupape proportionnelle (36) est suivie d'un seul dispositif de soupape de commutation (40).

3. Véhicule selon la revendication 1 ou 2, **caractérisé en ce que** tous les dispositifs de soupape de commutation (40) présentent entre eux les mêmes possibilités de réglage et de commutation, en particulier sont identiques.

4. Véhicule selon l'une des revendications précédentes, **caractérisé en ce que** toutes les soupapes proportionnelles (36) présentent entre elles les mêmes possibilités de réglage et de commutation, en particulier sont identiques.

5. Véhicule selon l'une des revendications précédentes, **caractérisé en ce que** chacun des dispositifs de soupape de commutation (40) présente trois ou quatre sorties (AI, Ar, M).

6. Véhicule selon l'une des revendications précédentes, **caractérisé en ce qu'**une soupape de sélection de mode de fonctionnement (48) est montée en amont du groupe de soupapes proportionnelles (36) provenant d'une pompe à huile (32), une seule alimentation en huile avec la pompe à huile (32) et un module d'entrée (46) étant de préférence montés en amont de la soupape de sélection de mode de fonctionnement (48).

7. Dispositif selon la revendication 6, **caractérisé en ce que** la soupape de sélection de mode de fonctionnement (48) est conçue pour commuter les dispositifs de soupape de commutation (40), en particulier pour commuter tous les dispositifs de soupape de commutation simultanément et de manière identique entre une position pour une sortie (Al, Ar, M).

8. Véhicule selon la revendication 7, **caractérisé en ce que** la commutation des dispositifs de soupape de commutation (40) au moyen de la soupape de sélection de mode de fonctionnement (48) commute ces dispositifs de soupape de commutation pour commander les entraînements hydrauliques uniquement des dispositifs de support (16, 17) d'une part ou uniquement du dispositif de mât (20) d'autre part.

9. Véhicule selon la revendication 8, **caractérisé en ce qu'**à l'intérieur des entraînements hydrauliques des dispositifs de support (16, 17), une distinction est faite entre au moins deux groupes, en particulier entre exactement deux groupes, en particulier entre les dispositifs de support (16l, 17l) situés sur le côté gauche du véhicule (11) et des dispositifs de support (16r, 17r) situés sur le côté droit du véhicule, les deux côtés ne pouvant de préférence pas être réglés ensemble et/ou simultanément.

10. Véhicule selon la revendication 8 ou 9, **caractérisé en ce qu'**il est prévu un dispositif de surveillance qui détecte si tous les dispositifs de soupape de commutation (40) sont dans la même position, de sorte que, conformément à la revendication 7, ils commandent uniquement les entraînements hydrauliques des dispositifs de support (16, 17) ou uniquement les entraînements hydrauliques du dispositif de mât (20) ou un groupe divisé d'entraînements hydrauliques, le dispositif de surveillance fermant de préférence, dans le cas où tous les dispositifs de soupape de commutation (40) ne se trouvent pas dans la même position, une soupape de sécurité qui est montée en amont des soupapes proportionnelles (36), en particulier également en amont de la soupape de sélection de mode de fonctionnement (48), de sorte que l'ensemble du dispositif de soupapes ne provoque aucune modification de pression ou commande sur aucun des actionneurs hydrauliques du dispositif d'entraînement hydraulique.

11. Véhicule selon la revendication 10, **caractérisé en ce que** le dispositif de surveillance comporte des moyens de rétroaction hydraulique, les moyens de rétroaction hydraulique passant de chaque dispositif de soupape de commutation (40) à travers tous les tiroirs de présélection (41) des dispositifs de soupape de commutation de manière à former une ligne de rétroaction vers la soupape de sécurité, la ligne de retour étant ouverte dans le cas où tous les tiroirs de présélection de tous les dispositifs de soupape de commutation se trouvent dans la même position, et la ligne de retour étant interrompue dans le cas où au moins un tiroir de présélection (41) d'un dispositif de soupape de commutation (40) se trouve dans une position différente de celle d'au moins un tiroir de présélection d'un autre dispositif de soupape de commutation.

12. Véhicule selon l'une des revendications précédentes, **caractérisé en ce que** les dispositifs de soupape de commutation (40) et/ou la soupape de sélection de mode de fonctionnement (48) peuvent être commandés électriquement, en particulier par un moteur électrique, au moyen d'un dispositif de commande (27), le dispositif de commande comportant des éléments de commande (28) destinés à un opérateur, le dispositif de commande (27) étant de préférence prévu à un emplacement central commun du véhicule (11).

13. Véhicule selon la revendication 12, **caractérisé en ce que** le dispositif de commande (27) est éloigné d'au moins 1 m des dispositifs de support (16, 17) et de l'agencement de mât (20).

14. Véhicule selon l'une des revendications précédentes, **caractérisé en ce que** le dispositif de soupapes (30) est disposé sur un support de soupapes commun, en particulier toutes les soupapes proportionnelles (36) et tous les dispositifs de soupapes de commutation (40) sont disposés sur le support de soupapes commun, le support de soupapes comportant de préférence une plaque de support (34) pour la fixation des soupapes proportionnelles (36) et des dispositifs de soupapes de commutation (40).
